# EUROPEAN PATENT APPLICATION

(11) **EP 2 902 082 A1**
(43) Date of publication of application: **05.08.2015**
(21) Application number: 13188802.6
(22) Date of filing: 16.10.2013
(51) Int. Cl.: A63F 13/20

(54) **Video games input device**

(71) Applicant: Weatherstone, Paul, Milton Keynes MK19 7EG (GB)
(72) Inventor: Weatherstone, Paul, Milton Keynes MK19 7EG (GB)
(74) Representative: Fortuna, Jevgenijs

(57) **Abstract**

The invention relates to video game input devices or video game controllers. There is offered a substantially gun-shaped game controller, comprising a body having a handle adapted to be grasped by a user; a trigger coupled to the body and adapted to be operated by the user's finger; as well as an analog stick, a switch array and a scroll wheel coupled to the body and adapted to be operated by the user's thumb of a hand holding the handle are positioned in or at the surface of an imaginary conical, pyramidal or tetrahedron shaped area, which vertex is directed towards the user holding the game controller, wherein the analog stick and the switch array are positioned in or at a base of said imaginary cone, pyramid or tetrahedron, but the scroll wheel is preferably positioned substantially horizontally atop the handle, such that the inside of the thumb of a hand holding the handle can conveniently abut the radial perimeter of the scroll wheel, thus enabling rotation of the scroll wheel in both directions by the thumb. The game controller is adapted to adjust the horizontal depth of the switch array and/or the analog stick to accommodate different hand sizes of users. The game controller preferably comprises a pair of said operably associated game controllers, wherein the pair of game controllers is adapted for two handed video game interactions.

## Description

### Field of the Invention

This invention relates generally to video game input devices or video game controllers, and more particularly to a pistol grip shaped video game input devices.

### Background Art

Video games, which are played on personal computers, game consoles and the like, have a wide variety of input methods and devices. Typically a video game can be controlled via a gamepad or alternatively a video game can be controlled via a mouse and keyboard.

The very nature of video games is one of competition. Video game players can compete with one another in real time, or they can compete against a previously achieved high score. As with any competitive pursuit, the choice of equipment or input method for any given video game can influence the outcome. To this end competitive video game players often choose a mouse/keyboard combination over that of a gamepad, because an optical mouse can be operated faster and more accurately than the analog thumb-stick found on a typical gamepad. Also the keyboard part of the mouse/keyboard arrangement allows a wide variety of preconfigured and configurable menu options to enhance gameplay. The mouse of mouse/keyboard arrangement is usually provided with a thumb operated scroll wheel, which is a useful option in game and game menu control.

However the disadvantages of the mouse/keyboard combination for the casual video gamer are many, primarily the mouse and keyboard are best operated on a sizable flat and stable horizontal surface such as a table or desk and this is sometimes not convenient or practical in a typical domestic environment. Secondarily a QWERTY type keyboards are relatively complex and require most users to have visual contact with the keys during gameplay in order to ensure fast and correct key selection, and thus, mouse/keyboard combinations require a steep learning curve to enable competent video gameplay.

Joysticks, triggers and buttons upon a typical gamepad are arranged in a standardized and universally recognized format, which is simple and relatively easy to operate. Furthermore the two index finger operated analog triggers on a gamepad allow a type of subtle control input that is difficult to achieve on a mouse/keyboard arrangement, for example, throttle and braking control. However the limited number of buttons deny the competitive gamer the chance to use a wide variety of useful preconfigured specific video game commands, furthermore the small fixed number of selection buttons upon typical gamepad limit the video game designer to a narrow range of gameplay options compared to the gameplay options of a QWERTY keyboard.

Recent developments in the three dimensional control of video games have made inroads into the video game market. Such three dimensional control devices are good at detecting body limb and hand movement, which can be used to control video game input, however depth detection type camera arrangements lack a convenient way to predictably make binary game input interactions via binary switches for example, a fire button or a game action selection switch. Also fine or subtle movements required to accurately control accelerating or braking within a video game are typically achieved with an analog trigger controlled by an index finger; such discrete finger movements are difficult to consistently detect using depth camera type game input systems.

A typical gamepad is arranged around the ergonomic limitation of the human hand, this arrangement consist of a left hand area and a right hand area, each area is further divided into two sub areas one being for the index finger and the other for thumb. This arrangement has evolved into a quasi de facto format for the majority of games designers regardless of hardware platform. Traditionally games designers and publishers accommodate the accepted standard game console controller which is specified or supplied by the game platform manufacturers. The known controllers have ensured a standard, which allows compatibility and familiarity for the video game user across a wide variety of games regardless of genre, publisher and hardware platform. The standard gamepad format is an ergonomic compromise, which takes into account the different hand sizes i.e. the sizes of children or people with small hands and adult and people with lager hands. This compromise has its disadvantages i.e. there is no room for a wide variety of menu choices that a full size "QWERTY" keyboard would allow and also there are no means to provide static mouse type scrolling in either horizontal or vertical planes, this would be advantageous for movement of game characters view point, and or background scene in video game play, furthermore fine, set it and leave it adjustment that is provided by a thumb operated mouse scroll wheel is not available.

There is known a handheld device resembling a television remote containing buttons, a 3-axis accelerometer, a high-resolution highspeed IR camera, a speaker, a vibration motor, and wireless Bluetooth connectivity (US2008015017). The device further containing a gun-shaped receptor with a barrel portion and a gripper portion with an open slot adapted to receive the core unit; the receptor comprising an analog stick and a trigger-like control switch, which may be operated with an index finger. The gun-shaped receptor is adapted to receive the well-known in the market handheld device resembling a television remote. The main disadvantage of the known device is that it is relatively inconvenient as two user's hands are required to operate one trigger, one analog stick and one cross-shaped direction pad.

There is known a gun-shaped game input handle of a multi-functional mobile electronic device (WO2013044724) comprising a gun-shaped housing, buttons and a direction control joystick fixed to the gun-shaped housing and adapted to control the actions and movements of a virtual character in a mobile electronic device game. The disadvantage of the device is relatively inconvenient location of the direction control joystick and buttons limiting user's competitiveness.

There is known a programmable game-based haptic enabled gun controller comprising a body, a handle, a trigger, an input/output port, one or more directional-pad controllers, as well as one or more buttons adapted to operate various features during game play (WO2010080766). The known device has limited number of control buttons, which can be operated by one thumb, thus also limiting the user's competitiveness.

There is known a forward tracking arc based pistol grip game controller (US7176893) comprising a flat moveable base; a pistol grip shaped joystick operably fixed to said base and having a forward faced trigger, a four way quadrant switch and a roller wheel adapted to be operated by the user's thumb; and an optical tracking sensor. The disadvantage of the device is relatively inconvenient location and direction of the four way quadrant switch and the roller wheel as well as limited number of control buttons, which can be operated by user's thumb. Moreover the known device is mostly designed for the so called first-person shooter games and is not so convenient for use with other type of games.

Most of the relevant prior art solutions do not have means to provide static mouse type scrolling in either horizontal or vertical planes, which is advantageous for movement of game characters view point, and or background scene in video game play. Moreover most of the prior art solutions do not take into account the different hand sizes i.e. the sizes of children or people with small hands and adult and people with lager hands, which decreases convenience of playing and limits the user's competitiveness.

### Disclosure of the Invention

It is an intention of this invention to provide a video game input device allowing increasing the user's competitiveness.

Furthermore it is an intention of this invention to provide a video game input device containing optimal number of different game input elements, all of which are located conveniently for operation by the user's thumb and index finger of a hand holding the device.

It is yet a further intention of this invention to allow simple and convenient adjustment to accommodate the ergonomic requirements of a wide range of hand sizes.

It is yet a further intention of this invention to provide a matched pair of video game input devices, which allow the convenience of the widely recognized standard gamepad format with ability to allow gesture based game input (pointing and aiming) suitable for camera based gesture detection type systems.

It is yet a further intention of this invention to provide a matched pair of video game input devices, which include dual thumb operated scroll wheels in order to allow fast an convenient input for a relatively large number of menu selection and game button options and or spatial scrolling in both X and Y direction.

There is offered a pistol grip shaped game controller, comprising a body having a handle adapted to be grasped by a user; a trigger coupled to the body and adapted to be operated by the user's finger; as well as an analog stick, a switch array and a scroll wheel coupled to the body and adapted to be operated by the user's thumb of a hand holding the handle are positioned in or at the surface of an imaginary area, or inside of the imaginary area, being a movement envelope of the thumb of a hand holding the handle of the game controller; the imaginary area, having the shape of a cone, pyramid or tetrahedron, preferably spherical cone, pyramid or tetrahedron, which vertex is directed towards the user holding the game controller and preferably is located in the region, where joint between metacarpal and proximal phalange (alternatively - joint between carpal and metacarpal) of a thumb of a user's hand holding the handle is located, wherein the analog stick and the switch array are positioned in or at a base of said imaginary cone, pyramid or tetrahedron. The longitudinal axis of the analog stick and the switch array preferably intersect at an acute angle and are preferably are positioned with 1-50° incline of their longitudinal axis towards horizontal of the game controller. The scroll wheel is positioned substantially horizontally atop the handle (preferably with 1-45° incline of its vertical axis towards vertical of the game controller), such that the inside of the thumb of a hand holding the handle can conveniently abut the radial surface of the scroll wheel enabling rotation of the scroll wheel in both directions by the thumb. The game controller is adapted to adjust the horizontal or longitudinal depth of the switch array and/or the analog stick to accommodate different hand sizes of users. The game controller preferably comprises a pair of operably associated game controllers described above, wherein the pair of game controllers is adapted for two handed video game interactions. These and other embodiments of the invention are further disclosed with reference to drawings.

### Brief Description of the Drawings

Fig. 1 shows one embodiment of the video game controlling device;
Fig. 2 - another embodiment of the device;
Fig. 3 - schematic side view of the device;
Fig. 3A - embodiment of the device showing that the scroll wheel can be adapted to be pressed downwards and, additionally or alternatively - sidewards, thus ensuring the additional type of game control;
Fig. 4A and 4B - embodiment of the device with spacers adapted to adjust the horizontal depth of the switch array and the analog stick;
Fig. 5A - embodiment of the device with helical screw means adapted to decrease and increase the longitudinal depth of the switch array and/or the analog stick;
Fig. 5B - embodiment of the device with movable and detachable top portion of the device allowing to decrease and increase the distance between the handle and the top portion of the device having analog stick, switch array and trigger;
Fig. 5C - another embodiment of the device with movable top portion of the device allowing to decrease and increase the distance between the handle and the top portion of the device having analog stick, switch array and trigger;
Fig. 6A and 6B - embodiment with detachable rod or stick like protuberance;
Fig. 7 - top view of one embodiment of paired devices adapted for two handed video game interactions.

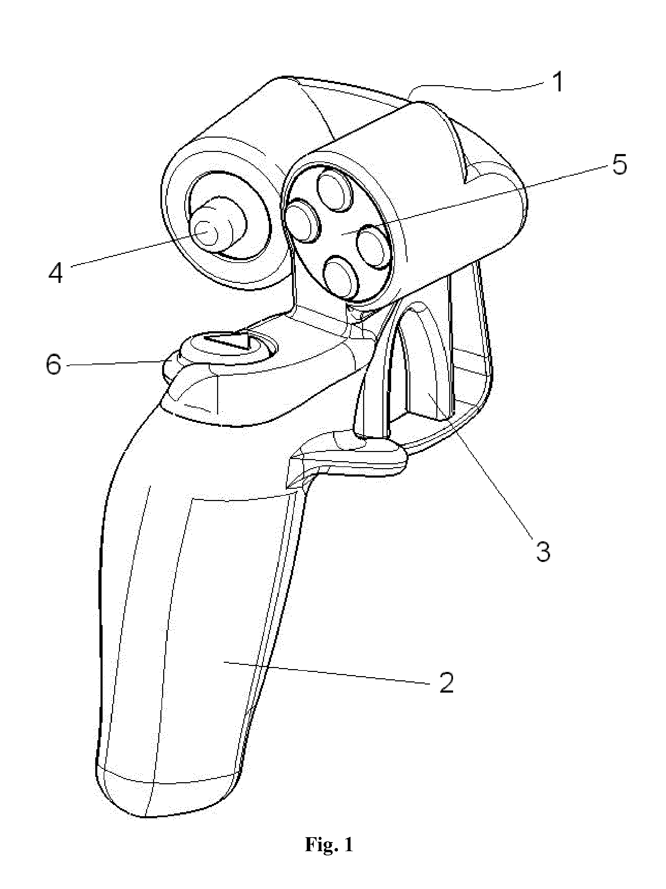

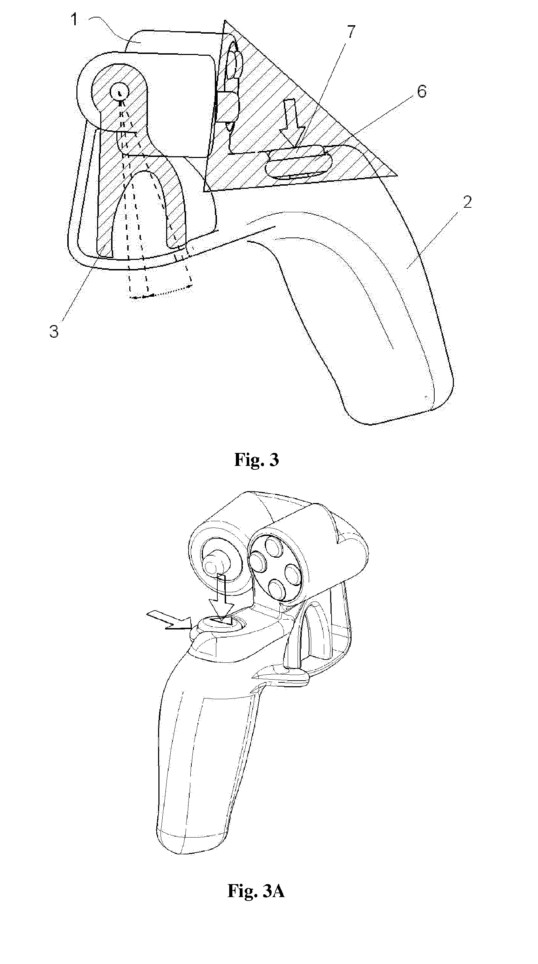

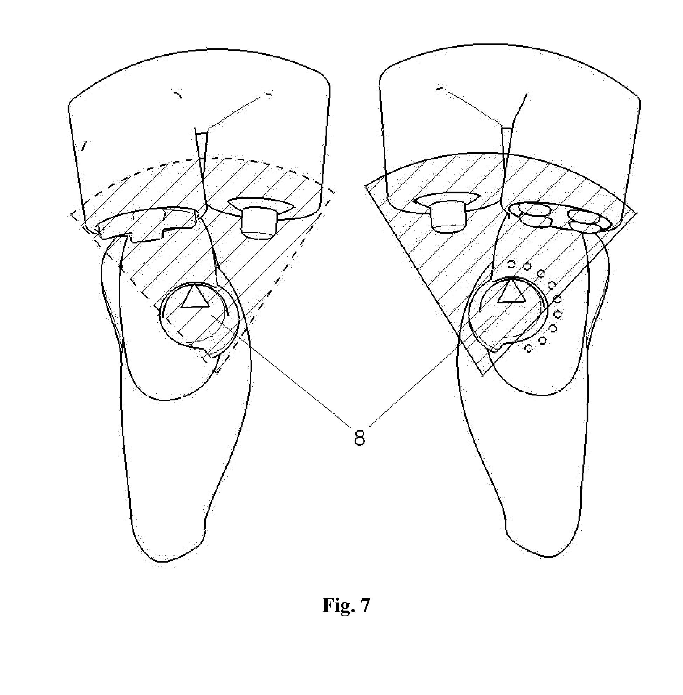

There is offered a game controller, which is substantially pistol grip or gun-shaped (Fig. 1). The game controller comprises: a body 1 having a handle 2 adapted to be grasped by a user; a trigger 3 coupled to the body 1 and adapted to be operated by the user's finger (preferably index finger); as well as an analog stick 4, a switch array 5 and a scroll wheel 6. The analog type stick 4, the switch array 5 and the scroll wheel 6 are coupled to the body 1, adapted to be operated by the user's thumb of a hand holding the handle 2 of the game controller and are preferably positioned in or at the surface of an imaginary area, or inside of the imaginary area, being a movement envelope of the thumb of a hand holding the handle 2 of the game controller; said imaginary area having the shape of a cone (preferably a spherical cone), which vertex is directed towards the user holding the game controller; preferably the vertex is located substantially in the region, where joint between metacarpal and proximal phalange (alternatively - joint between carpal and metacarpal) of a thumb of a user's hand holding the handle 2 is located - as shown in Fig. 3 and 7. The imaginary area can also have a shape of a pyramid (preferably conical pyramid), or a tetrahedron (preferably spherical tetrahedron).

The analog stick 4 and the switch array 5 are preferably positioned in or at a base of the imaginary cone, pyramid or tetrahedron (Fig. 3 and 7). According to one embodiment the analog stick 4 and the switch array 5 are positioned vertically and their longitudinal axes are parallel to the horizontal of the game controller. However according to the preferred embodiment the central longitudinal axes of the analog stick 4 and the switch array 5 intersect at an acute angle; the analog stick 4 and the switch array 5 are preferably positioned with 1-50° incline of their central longitudinal axes towards horizontal of the game controller. The central longitudinal axes of the analog stick 4 and the switch array 5 intersect from the side of the game controller directed to the user holding the game controller, preferably in the region, where joint between metacarpal and proximal phalange, or carpal and metacarpal of a thumb of a user's hand holding the handle 2 is located.

The scroll wheel 6 is positioned atop the handle 2, such that the inside of the thumb of a hand holding the handle 2 can conveniently abut the radial perimeter of the scroll wheel 6, thus enabling rotation of the scroll wheel 6 in both directions by the thumb. The scroll wheel 6 is preferably positioned substantially horizontally with 1-45° incline of its vertical axis towards vertical of the game controller. The scroll wheel 6 is preferably provided with axial binary thumb switch 7 and/or radial binary thumb switch 8 adapted for operation by the thumb of a hand holding the handle 2 of the game controller. The scroll wheel 6 also can be adapted to be pressed downwards (Fig. 3) and/or sidewards (Fig. 3A), wherein the device is adapted to ensure the additional type of game control upon pressing the scroll wheel 6 downwards and/or sidewards.

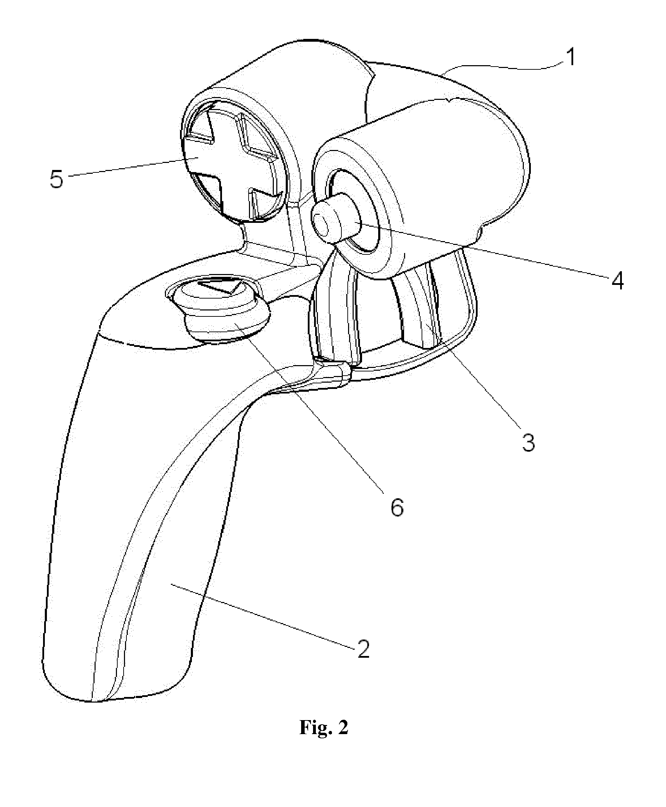

The switch array 5 can be a directional pad (e.g. as shown in Fig. 1), a cross-key button (e.g. as shown in Fig. 2) or a plurality of control buttons (preferably - equidistant). The trigger 3 is adapted to be operated in two opposite directions - back and forth (Fig. 3).

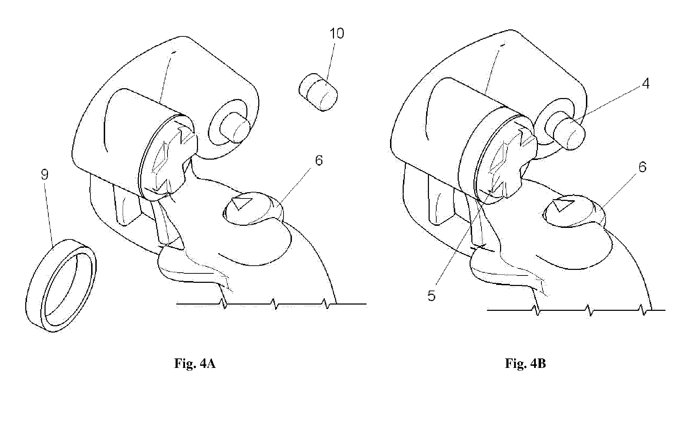

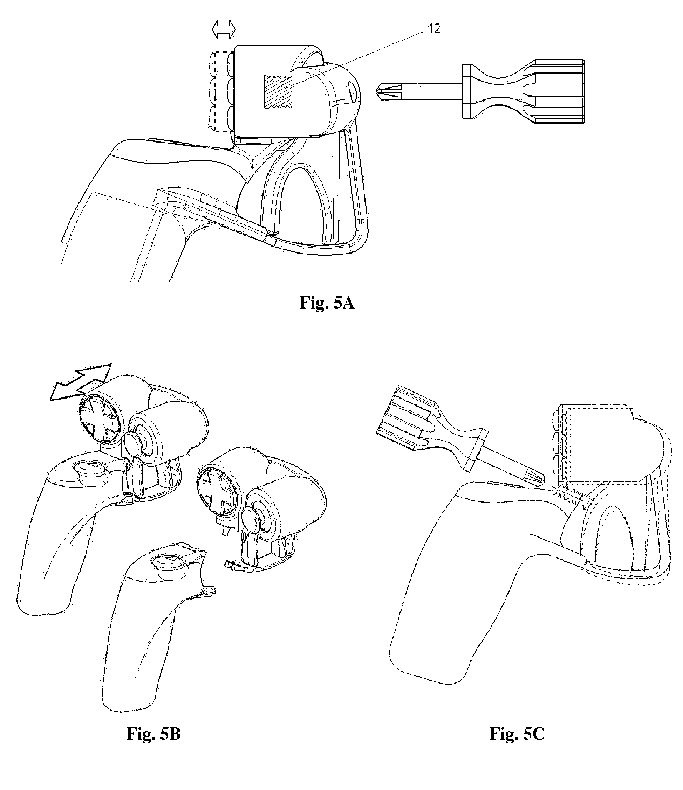

According to the preferred embodiment the game controller is adapted to adjust the horizontal depth of the switch array 5 and/or the analog stick 4 to accommodate different hand sizes of users. According to this embodiment the distance of the thumb face of the switch array 5 and/or the distance of the thumb face of the analog stick 4 from the X-Axis of the handle 2 is being configurable to aid thumb ergonomics with the deployment of spacer elements 9 and 10. Fig. 4A shows one embodiment of the device adapted for use by people with big hands, while Fig. 4B shows the same device with spacer elements 9 and 10 changing horizontal depth of the switch array 5 and the analog stick 4 and thus making the device comfortable for use by people with small hands. According to other embodiments the horizontal depth of the switch array 5 and/or the analog stick 4 can be adjusted by use of helical screw means 12 adapted to decrease and increase the longitudinal depth of the switch array 5 and/or the analog stick 4 (Fig. 5A); or by replacing the switch array 5 and/or the analog stick 4 with another switch array 5 and/or the analog stick 4 of different longitudinal size. Fig. 5B and 5C show other embodiments of the invention, where a top portion having the analog stick 4, the switch array 5 and the trigger 3 can be movable and detachable, allowing adjusting the distance between the handle 2 and the top portion of the device. The top portion can be fixed at a desirable distance from the pistol grip by means of helical screw (Fig. 5C) or other known means.

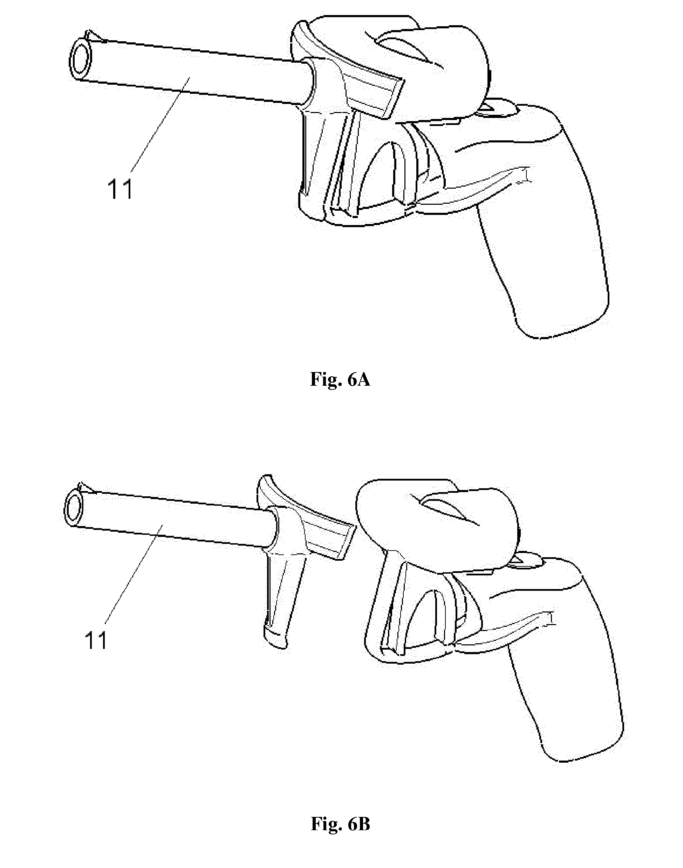

The game controller can be provided with a detachable or non-detachable rod or stick like protuberance 11 positioned upon the handle 2 in a similar manner to that of a revolver's barrel relationship to a pistol grip (Fig. 6A-6B). The protuberance 11 can be provided with known means providing ability to allow gesture based game input (pointing and aiming). Alternatively, the device having protuberance 11 can be conveniently used with known camera based gesture detection type systems.

According to another aspect of the invention a game controller comprising a pair of operably associated game controllers described above (Fig. 7), wherein the pair of game controllers is adapted for two handed video game interactions ergonomically adapted to be held by the user's left and right hand. The pair of game controllers can be a mirrored pair of game controllers with identical set of the switch array 5; alternatively, the switch arrays 5 of left and right game controller can have different switch arrays (input units) 5 - a directional pad, a cross-key button, a plurality of control buttons or other known gamepad format.

## Claims

**1.** A substantially pistol grip shaped game controller comprising: a body (1) having a handle (2) adapted to be grasped by a user; a trigger (3) coupled to the body (1) and adapted to be operated by the user's finger; an analog stick (4) coupled to the body (1) and adapted to be operated by the user's finger, **characterized in that** the game controller further comprises a switch array (5) and a scroll wheel (6), wherein the analog stick (4), the switch array (5) and the scroll wheel (6) are adapted to be operated by the user's thumb of a hand holding the handle (2) of the game controller and are positioned in or at the surface of an imaginary area, or inside of the imaginary area, having the shape of a cone, pyramid or tetrahedron, preferably spherical cone, pyramid or tetrahedron, which vertex is directed towards the user holding the game controller, wherein the analog stick (4) and the switch array (5) are positioned in or at a base of said imaginary cone, pyramid or tetrahedron.

**2.** The game controller according to claim 1, wherein the analog stick (4), the switch array (5) and the scroll wheel (6) are positioned in or at the surface of an imaginary area, or inside of the imaginary area, having the shape of a cone, pyramid or tetrahedron, preferably spherical cone, pyramid or tetrahedron, which vertex is located in the region, where joint between metacarpal and proximal phalange, or carpal and metacarpal of a thumb of a user's hand holding the handle (2) is located.

**3.** The game controller according to claim 1, wherein the analog stick (4) and the switch array (5) are positioned substantially vertically, wherein their central longitudinal axes intersect at an acute angle, hereto said longitudinal axes intersect from the side of the game controller directed to the user holding the game controller, preferably in the region, where joint between metacarpal and proximal phalange, or carpal and metacarpal of a thumb of a user's hand holding the handle (2) is located.

**4.** The game controller according to any preceding claims, wherein the analog stick (4) and the switch array (5) are positioned with 1-50° incline of their longitudinal axes towards horizontal of the game controller.

**5.** The game controller according to any preceding claims, wherein the scroll wheel (6) is positioned substantially horizontally atop the handle (2), such that the inside of the thumb of a hand holding the handle (2) can conveniently abut the radial perimeter of the scroll wheel (6), thus enabling rotation of the scroll wheel (6) in both directions by the thumb.

**6.** The game controller according to claim 5, wherein the scroll wheel (6) is positioned substantially horizontally with 1-45° incline of its vertical axis towards vertical of the game controller.

**7.** The game controller according to any preceding claims, wherein the game controller is adapted to adjust the longitudinal depth of the switch array (5) and/or the analog stick (4), or adapted to adjust the longitudinal depth of a top portion of the device having the switch array (5) and the analog stick (4) to accommodate different hand sizes of users.

**8.** The game controller according to claim 7, wherein the longitudinal depth of the switch array (5) and/or the analog stick (4) is adjusted with the deployment of spacer elements (9) and (10); or helical screw means adapted to decrease and increase the longitudinal depth of the switch array (5) and/or the analog stick (4); or by replacing the switch array (5) and/or the analog stick (4) with switch array (5) and/or the analog stick (4) of different longitudinal size.

**9.** The game controller according to any preceding claims, wherein the trigger (3) is adapted to be operated in two opposite directions.

**10.** The game controller according to any preceding claims, wherein the scroll wheel (6) is provided with axial binary thumb switch (7) and/or radial binary thumb switch (8) adapted for operation by the thumb of a hand holding the handle (2) of the game controller.

**11.** The game controller according to any preceding claims, wherein the scroll wheel (6) is also adapted to be pressed downwards and, additionally or alternatively - sidewards, wherein the device is adapted to ensure the additional type of game control upon pressing the scroll wheel (6) downwards and/or sidewards.

**12.** The game controller according to any preceding claims, wherein the game controller is provided with an optionally detachable rod or stick like protuberance (11) positioned upon the handle (2) in a similar manner to that of a revolver's barrel relationship to a pistol grip.

**14.** A game controller comprising a pair of game controllers according to any preceding claims, wherein the pair of game controllers is adapted for two handed video game interactions.

**15.** The game controller according to claim 14, wherein the pair of game controllers is a mirrored pair of game controllers according to any claims 1 to 13.
